# EUROPEAN PATENT APPLICATION

(11) **EP 4 261 935 A1**
(43) Date of publication of application: **18.10.2023**
(21) Application number: 22168409.5
(22) Date of filing: 14.04.2022
(51) Int. Cl.: H01M 4/134, H01M 4/36, H01M 4/40

(54) **PRE-LITHIATED SILICON-CARBON COMPOSITE MATERIAL, AN ANODE COMPRISING THE SAME AND A METHOD TO MANUFACTURE OF A COMPOSITE MATERIAL**

(71) Applicant: Cellforce Group GmbH, 72072 Tübingen (DE); Group14 Technologies, Woodinville, WA 98072 (US)
(72) Inventor: Sommer, Heino, 76344 Eggenstein-Leopoldshafen (DE); Costantino, Henry R., Woodinville, 98072 (US)
(74) Representative: Michalski Hüttermann & Partner Patentanwälte mbB

(57) **Abstract**

The invention relates to a lithium-silicon-carbon composite material, especially formed as a surface-coated lithium-silicon-carbon composite material, comprising a porous carbon scaffold comprising micropores and mesopores and a total pore volume no less than 0.5 cm³/g; a silicon content from 30% to 70%, including 30% and 70%; a Li content from 2% to 20%, including 2% and 20%; and an at least partly applied first surface coating layer forming a surface coating on a surface area of the lithium-silicon-carbon composite comprising one or multiple elements of Li, B, Al, Si, P, Ti, Zr, Nb and/or W.

## Description

The present disclosure relates to a surface-coated lithium-silicon-carbon composite material comprising a porous carbon scaffold comprising micropores and mesopores with a pore volume. Furthermore, the disclosure relates to a method for manufacturing a surface-coated lithium-silicon-carbon composite material, to an anode electrode and to an electrochemical storage device.

Lithium-ion batteries are widely used and provide stored energy to different components. Especially in electric vehicles and in hybrid electric vehicles such lithium-ion batteries are supplying the vehicle components and the drivetrain with electrical energy. In such use cases a long electric driving range is highly desirable and can be achieved by increasing the capacity of the battery. The capacity of the battery may be increased by increasing the surface area of the electrodes. This is achieved by a more complex surface structure. Different methods are known for coating at least one of the current collectors of the anodes with silicon-carbon in order to increase the area for reversible lithium intercalation and the amount of lithium ions taking part during the charging and discharging procedure. Such complex surface structures and coatings may be prone to chemical reactions with compounds of the environment e.g. during the manufacturing of the lithium-ion cells. Especially during electrolyte filling of the lithium-ion cells parts of the anodes and their surface structures accidently can be exposed to harmful, e.g. oxidizing, substances.

Moreover, with a large number of cycles, lithium-ion batteries are still susceptible to capacity loss, due to formation of the solid electrolyte intermediate phase layer (SEI layer). Such SEI layer usually forms due to a reduction of organic solvents and anions on an electrode surface during charge and discharge cycles of the lithium-ion batteries. A relevant part of the SEI layer formation occurs during the first charge and discharge cycle.

An objective of the present disclosure is to provide a lithium-silicon-carbon composite material and a method for manufacturing a lithium-silicon-carbon composite material which comprises an improved chemical stability and which reduces the lithium losses for the formation of the SEI layer in the first cycles of an electrochemical device. This object is achieved by the subject-matter of the independent claims. Further developments of the subject-matter of the independent claims are provided in the subclaims.

According to one aspect of the present disclosure a lithium-silicon-carbon composite material is provided. The lithium-silicon-carbon composite material may be formed as a surface-coated lithium-silicon-carbon composite material or as a surface-coated lithium-alloy-silicon-carbon composite material.

Such lithium-silicon-carbon composite material may be utilized in an anode electrode and accordingly in an electrochemical storage device like a lithium-ion cell or battery.

The lithium-silicon-carbon composite material comprises a porous carbon scaffold with micropores and mesopores and a total pore volume of more than 0.5 cm³/g.

Moreover, the porous carbon scaffold of the lithium-silicon-carbon composite material may comprise a plurality of particles for additional adjustment of its chemical and mechanical properties. Providing additional particles inside the porous carbon scaffold of the lithium-silicon-carbon composite material enables control of the kinetics of the lithium ions inside the lithium-silicon-carbon composite material.

The lithium-silicon-carbon composite material comprises a silicon content between 30% and 70%, including 30% and 70%. Moreover, a Li content from 2% to 20%, including 2% and 20% is incorporated into the lithium-silicon-carbon composite material. Thus, the lithium-silicon-carbon composite material is provided in a pre-lithiated form. The silicon content and the lithium content can be defined in relation to the weight/mass or to the volume of the entire lithium-silicon-carbon composite material.

Furthermore, the lithium-silicon-carbon composite material comprises an at least partly applied first surface coating layer forming a surface coating on a surface area of the lithium-silicon-carbon composite. The at least partly applied first surface coating layer comprises one or multiple elements of Li, B, Al, Si, P, Ti, Zr, Nb and/or W.

In a further aspect of the invention, an anode electrode is provided, which comprises a surface-coated silicon-carbon material. The anode electrode can preferably comprise a current collector e.g. a metal foil. On one or on both sides of the current collector the lithium-silicon-carbon composite material can be provided for improved electrical characteristics of the anode electrode. The surface-coated silicon-carbon material is preferably in pre-lithiated form and thus as a surface-coated lithium-silicon-carbon material.

The lithium-silicon-carbon composite material can for example comprise the at least one surface coating on the surface areas which are not in contact with the current collector of the electrode anode.

By providing at least one surface coating e.g. the first surface coating layer the chemical and mechanical stability of the surface-coated lithium-silicon-carbon composite material and thus of the anode electrode with such a material is improved. Especially, the surface coating can be applied via a chemical vapor deposition, like an atomic layer deposition process. Such surface coating can also be applied onto lithium-silicon-carbon composite materials with complex or uneven surface geometries.

Due to the introduced lithium into the surface-coated lithium-silicon-carbon composite material the formation of the SEI layer during the first charge and discharge cycles in the anode electrode with such a material is prevented or minimized. A SEI layer usually forms due to a reduction of organic solvents and anions on a surface of the anode electrode during charge and discharge cycles of an electrochemical cell. Since such organic solvents and anions are not present in the pre-lithiated composite material, the SEI layer formation is minimized.

The lithium ions for the reversible lithium intercalation may bypass the first surface coating without remarkable decrease in corresponding kinetics when the at least partially applied first surface coating is formed as a layer with a thickness of 0.1 nm to 1 µm.

In accordance with a further embodiment the first surface coating comprises a metal oxide from at least one or more of the elements B, Al, Si, Zr, Nb and/or W. For example suitable metal oxides may be formed as Al₂O₃ and/or LiAlO₂.

In another embodiment suitable metal oxides may be formed as ZrO₂ or/and Li₂ZrO₃ or mixtures of Al₂O₃, ZrO₂ and mixed lithium aluminum oxides and lithium zirconium oxides.

Appropriate surface coatings can be applied via atomic layer deposition (ALD) process of trimethylaluminum and water or oxygen (subsequent two or more ALD cycles) at temperature between 100 °C and 450 °C, optionally followed by a chemical reaction of the resulting aluminum oxide and aluminum hydroxides with a lithium compound like Li-N(SiMe₃)₂ to form a lithiated metal oxide. Such coatings can also be applied in combination with heat exposure and/or in combination with a catalyst. In another embodiment the surface coating layer can be applied by of mixing a metal oxide compound (Al₂O₃, Zr(OH)₄, ZrO(OH)₂) with lithium compounds, followed by a heat treatment step an temperature higher than 200 °C.

In a further embodiment the first surface coating is covering at least 50% of the surface area of the lithium-silicon-carbon composite material. Thus, most of the surface area of the lithium-silicon-carbon composite material can be protected by the first surface coating. The surface area of the lithium-silicon-carbon composite material is defined as the entire surface area in its final form applied to an anode electrode. Thus, all or most of the surface of the lithium-silicon-carbon composite material which is not in contact with a current collector foil of the anode electrode can comprise the surface coating.

The surface coating of the lithium-silicon-carbon composite material may comprise multiple surface coating layers which may also at least partially cover the available surface area of the lithium-silicon-carbon composite material. Different surface coating layers may overlap each other at least partially.

The lithium-silicon-carbon composite material can comprise an additional protection when the surface area of the lithium-silicon-carbon composite material is at least partially covered by the first surface coating layer and at least partially covered by a second surface coating layer. Preferably, the second surface coating layer is at least partially applied on top of the first surface coating layer and/or besides the first surface coating layer. The second surface coating layer enables additional control of the chemical and mechanical stability of the lithium-silicon-carbon composite material.

Based on an embodiment of the lithium-silicon-carbon composite material, the second surface coating layer is formed as a carbon coating. Such second surface coating layer may result in a reduced electrical resistance of the lithium-silicon-carbon composite material in a transition area between the second surface coating layer and a current collector or a metal when utilizing the lithium-silicon-carbon composite material in an electrode. Moreover such second surface coating layer may increase the electrical conductivity within the layers of the lithium-silicon-carbon composite material. In another embodiment, an additional step can be applied to further passivate the surface area or the lithium-silicon-carbon composite material by flushing dry atmosphere (O₂, N₂ or mixtures thereof) over the lithium-silicon-carbon composite material at elevated temperatures between 120 °C and 250 °C. This procedure helps to improve the processability with water-based binder solutions, especially to avoid a H₂ formation.

In a further embodiment of the lithium-silicon-carbon composite material the lithium-silicon-carbon composite material comprises a surface area in the range of 2m²/g to 30 m²/g, more preferably in the range of 4 m²/g to 10 m²/g. The appropriate boundaries of, 2 m²/g, 30 m²/g, 4 m²/g and 10 m²/g may also form the part of the defined ranges. Thus, the first surface coating layer and/or the second surface coating layer can be efficiently applied onto a lithium-silicon-carbon composite material with an increased surface area due to its porous carbon scaffold.

Based on a further embodiment of the lithium-silicon-carbon composite material the lithium-silicon-carbon composite material comprises lithium. Moreover, the first surface coating layer may also comprise lithium formed as a metal oxide. For example the first surface coating may comprise a mixture of Al₂O₃, AIO(OH) and LiAlO₂ which may act as channels for lithium ions during the reversible lithium intercalation between an electrolyte and the lithium-silicon-carbon composite material. Thus, the kinetics of the lithium ions through the first and/or second surface coating can be improved.

According to a further aspect of the invention a method for manufacturing a surface-coated lithium-silicon-carbon composite material is provided. In a method step a porous carbon scaffold with micropores and mesopores is provided. In a further step a Li compound is introduced into the micropores and mesopores of the provided porous carbon scaffold via a solution based infiltration method. Then the solvent of the solution based infiltration method is removed in order to yield or form a microporous and mesoporous carbon scaffold with introduced Li compound. Furthermore, at least one additional compound comprising Si, Fe, Al, Ni, W and/or Ti is introduced into the micropores and mesopores of the porous carbon scaffold by chemical vapor infiltration in order to form a lithium-alloy-carbon composite material. The additional compound is preferably SiH₄. At least one surface coating layer is applied at least partially on a surface area of the lithium-alloy-carbon composite material. The at least one surface coating layer comprises silicon oxides, aluminum oxides or zirconium oxides or lithium oxides. Thus, after applying of the at least one surface coating layer a surface-coated lithium-silicon-carbon composite material is formed.

The aluminum or the zirconium may remain in the material so that the surface-coated lithium-silicon-carbon composite material can also be formed as a surface-coated lithium-alloy-carbon composite material

By providing a surface coating which comprises silicon oxides or aluminum oxides or zirconium oxides the lithium-silicon-carbon composite material can be protected against unintentional chemical reaction like uncontrolled oxidation processes. Especially, while manufacturing battery cells or electrochemical storage devices an electrode comprising the surface coated lithium-silicon-carbon composite material will provide an improved chemical stability and reduced likelihood to unwanted chemical reactions due to the at least partial surface coating.

In order to introduce lithium into the lithium-silicon-carbon composite material, the lithium compound can be introduced as LiAlH₄ into the micropores and mesopores of the provided porous carbon scaffold via the solution-based infiltration method. The solution can be removed using vacuum and/or heating at temperatures e.g. above 100°C. After heating the resulting material and introducing SiH₄ at a temperature of e.g. 450°C with the chemical vapor infiltration method byproducts like CH₄ and H₂ may evaporate, too. Thus only Li-AI of the LiAlH₄ of the LiAlH₄ may remain and form Li-Al-Si alloys in the porous carbon scaffold.

In an embodiment, the at least one surface coating layer of the surface area coating of the lithium-silicon-carbon composite material is applied via a gas phase deposition method. Thus, methods like atomic layer deposition or molecular layer deposition can be carried out in order to provide a surface coating with a controlled and uniform layer thickness.

In a further embodiment, the at least one surface coating of the lithium-alloy-carbon composite material or lithium-silicon-carbon composite material is treated with a metal alkoxide or metal amide or alkyl metal compound to form a processed compound surface on the surface area of the lithium-silicon-carbon composite material, wherein the processed compound surface is treated with moisture or oxygen or ozone in order to form the at least one layer of the first surface coating layer. Such materials for formation of the processed compound surface are widely used and thus can be provided in a cost efficient manner. For example trimethylaluminum can be utilized in order to form the processed compound surface. By additional heat treatment of the surface coated lithium-silicon carbon compound the lithium from the lithium-silicon carbon composite can react with the aluminum oxide and/or zirconium oxide and form lithiated AI-O and Zr-O compounds like LiAlO₂ and/or Li₂ZrO₃ as the surface coating layer.

At least one surface coating layer of the surface area of the lithium-silicon-carbon composite material is alternatively formed with lithium content in a further embodiment. Thus, by providing lithium, e.g. as LiAlO₂ besides Al₂O₃ the molecules channels for faster lithium ion exchange between an electrolyte and the lithium-silicon-carbon composite material of an electrode can be introduced.

In accordance with a further embodiment, the surface coating of the surface area of the lithium-silicon-carbon composite material comprises a metal oxide from at least one of the elements B, Al, Si, Zr, Nb, W and/or Li. Thus, in case of an atomic layer deposition or molecular layer deposition the metal oxides are utilized as precursors. Alternative or additional precursors may be formed as ZrO₂, TiO₂, Al₂O₃, SiNₓ, TaNₓ etc. and can be introduced by mixing methods. Furthermore, molecules like Nb(OEt)₅ or Li-N(SiMe₃)₂ can be introduced in order to precisely control the chemical composition of the at least one surface coating. Thus, the method for manufacturing of the surface coated lithium-silicon-carbon composite material comprises a plurality of possible materials for adjustment of the chemical and mechanical properties of the surface coating.

In a further embodiment, during the formation of the at least one surface coating layer of the surface coating of the lithium-silicon-carbon composite material a temperature in a range of 25 °C to 550 °C is applied. Thus, methods like thermal atomic or molecular layer deposition or plasma-enhanced atomic or molecular layer deposition are suitable for the manufacturing of the surface coated lithium-silicon-carbon composite material.

Based on a further embodiment, the treatment of the lithium-silicon-carbon composite material with a metal alkoxide or metal amide or alkyl metal compound to form a processed compound surface and the treating of the treatment of the processed compound surface with moisture or oxygen or ozone are repeated at least once. Thus, the formation of an even coating of the surface area of the lithium-silicon-carbon composite material without leaving any unwanted traces of the processed compounds e.g. AlCH₃ can be ensured.

The manufacturing method can be accelerated if during the treatment of the processed compound with moisture or oxygen or ozone a temperature in a range from 25 °C to 550 °C is applied. Preferably, the manufacturing temperature of this step is in the range of 250°C to 450°C, more preferably in the range of 350° to 400°C.

Based on a further aspect of the invention, a method for manufacturing at least one anode electrode is provided. In a step, a silicon-carbon composite mixture with at least one carbon is mixed. Preferably, the silicon-carbon composite mixture is formed as lithium-silicon-carbon composite mixture.

In a further step the silicon-carbon composite mixture is combined with at least one aqueous binder solution and/or with at least one non-aqueous binder solution in order to form an electrode paste. Furthermore, the electrode paste is applied at least partially on at least one surface of a current collector. The current collector may be formed as a foil made of a material which is electrically conductive.

In a further step, the current collector with the applied electrode paste is dried at a temperature of 100 °C to 140 °C forming the at least one anode electrode.

As a binder a styrene-butadiene gum/carboxymethylcellulose (CMC/SBR) blend, a polyacrylic acid (PAA) and/or a lithium polyacrylic (LiPAA) or a sodium polyacrylic (NaPAA) may be utilized. In an alternative embodiment, the binder is formed as a fluoropolymer such as a polytetrafluoroethylene (PTFE), a perfluoroalkoxy polymer resin (PFA), a fluorinated ethylene propylene (FEP), a polyethylene tetrafluoroethylene (ETFE), a polyvinyl fluoride (PVF), a polyethylene chlorotrifluoroethylene (ECTFE), a (polyvinylidene fluoride (PCDF), a (polychlorotrifluoroethylene (PCTFE), a trifluoroethanol, or combinations of at least one of these materials with at least one other material. In a further embodiment, a binder is a polyimide or a copolymer of polyacrylic acid and styrene-butadiene. Further possible binders may be formed as methyl methacrylate or as polyvinylidene difluoride.

The step of the surface coating can be applied after the drying process of the electrode paste or the silicon-carbon composite can be provided in an already surface coated form.

Depending on the preferred application, according to a further aspect of the invention, a manufacturing process for the anode electrode can also be performed based on dry or semi-dry silicon-carbon composite mixture.

In a first step a dry silicon-carbon composite mixture combined with a binder powder and comprising graphite particles and/or carbon black particles is provided. The binder powder may be formed as PTFE powder.

Optionally 5% to 10% of ethylene carbonate can be added to the mixture.

Then, the silicon-carbon composite mixture combined with the binder powder is applied via calendering at least partially on at least one surface of a conductor foil or current collector. In a further step, at least one surface coating is applied on a surface area of the lithium-silicon-carbon composite material forming the surface-coated lithium-silicon-carbon composite material, wherein the at least one surface coating comprises aluminum oxides or zirconium oxides and covers the surface area of the lithium-silicon-carbon composite material at least partially.

The conductor foil with the applied dry or semi-dry electrode paste is then dried at a temperature of e.g. 100 °C to 140 °C forming the at least one anode electrode.

In a further aspect of the invention an electrochemical storage device, especially formed as a lithium-ion-battery or lithium-ion-battery cell, is provided. The electrochemical storage device comprises at least one inventive anode electrode, at least one cathode electrode, a separator disposed between the cathode electrode and the anode electrode, and an electrolyte comprising lithium ions. The cathode electrode preferably comprises a transition metal oxide. Preferably, the components of the electrochemical storage device are positioned inside a housing or case, e.g. aluminum pouch.

By utilizing an anode electrode with the surface-coated silicon-carbon material the requirements on a dry room environment for manufacturing the electrochemical storage device can be reduced due to the surface protected anode electrode.

In a further aspect, a usage of a lithium-silicon-carbon composite material in an anode electrode is disclosed, wherein the silicon-carbon composite comprises a porous carbon scaffold comprising micropores and mesopores and a total pore volume no less than 0.5 cm³/g; a silicon content from 30% to 70%; a Li content from 2% to 20%, including 2% and 20%; and comprises an at least partly applied first surface coating layer forming a surface coating on a surface area of the lithium-silicon-carbon composite comprising one or multiple elements of Li, B, Al, Si, P, Ti, Zr, Nb and/or W. The silicon content and the lithium content can be defined in relation to the weight/mass or in relation to the volume of the entire lithium-silicon-carbon composite material.

In a further embodiment, the surface coating layer on the silicon-carbon composite has a thickness in the range from of 0.1 nm to 0.1 µm.

In a further embodiment, the surface coating layer on the lithium-silicon-carbon composite material comprises a metal oxide from at least one or more of the elements B, Al, Si, Zr, Nb, Wand/or Li.

In a further embodiment, the surface coating area of the at least one surface coating is covering 50% or more of the surface area of the lithium-silicon-carbon composite material.

In a further embodiment, the lithium-silicon-carbon composite material comprises a further or second surface coating layer on top of the first surface coating layer, whereby the first surface coating layer and the second surface coating are forming the surface coating area at least partially.

In a further embodiment, the further or the second surface coating is a carbon coating.

In a further aspect a usage of an anode electrode is provided in an inventive electrochemical storage device.

The present disclosure will be explained in more detail below on the basis of schematic embodiments shown in the accompanying drawings:
- Fig. 1: shows an exemplary diagram illustrating a method for manufacturing a surface-coated lithium-silicon-carbon composite material according to an embodiment of the invention,
- Fig. 2: shows an exemplary electrochemical storage device with a manufactured electrode anode comprising a surface-coated lithium-silicon-carbon composite material, and
- Fig. 3: shows an exemplary electrochemical storage device according to a further embodiment with a manufactured electrode anode comprising a surface-coated lithium-silicon-carbon composite material.

In the figures, identical reference numbers identify similar elements. The sizes and relative positions of elements in the figures are not necessarily drawn to scale and some of these elements are enlarged and positioned to improve figure legibility. Further, the particular shapes of the elements as drawn are not intended to convey any information regarding the actual shape of the particular elements, and have been solely selected for ease of recognition in the figures.

Unless the context requires otherwise, throughout the present specification and claims, the word "comprise" and variations thereof, such as, "comprises" and "comprising" are to be construed in an open, inclusive sense, that is, as "including, but not limited to". In the present description, any concentration range, percentage range, ratio range, or integer range is to be understood to include the value of any integer within the recited range and, when appropriate, fractions thereof (such as one tenth and one hundredth of an integer), unless otherwise indicated. As used herein, the terms "about" and "approximately" mean ± 20%, ± 10%, ± 5% or ± 1% of the indicated range, value, or structure, unless otherwise indicated. It should be understood that the terms "a" and "an" as used herein refer to "one or more" of the enumerated components. The use of the alternative (e.g., "or") should be understood to mean either one, both, or any combination thereof of the alternatives.

Reference throughout this specification to "one embodiment" or "an embodiment" means that a particular feature, structure or characteristic described in connection with the embodiment is included in at least one embodiment of the present disclosure. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

Unless defined otherwise, all technical and scientific terms used herein have the same meaning as is commonly understood by one of skill in the art to which this disclosure belongs. As used in the specification and claims, the singular form "a", "an" and "the" include plural references unless the context clearly dictates otherwise.

The term carbon portion of the silicon-carbon composite materials refers to a material or substance consisting of carbon or at least comprising carbon. In this regard, a carbon material may comprise high purity, amorphous and crystalline materials. A carbon material may be an activated carbon, a pyrolyzed dried polymer gel, a pyrolyzed polymer cryogel, a pyrolyzed polymer xerogel, a pyrolyzed polymer aerogel, an activated dried polymer gel, an activated polymer cryogel, an activated polymer xerogel, an activated polymer aerogel, or a combination thereof. In a further embodiment, a carbon is producible by a pyrolysis of coconut shells or other organic waste. In this regard, a polymer is a molecule comprising two or more repeating structural units. A porous carbon, also known as a porous carbon material, offers the advantage that it is usually easy to produce, usually has low impurities and a large pore volume. As a result, a porous carbon exhibits good electrical conductivity and high mechanical and chemical stability. In one embodiment, the carbon material has a high micropore volume ratio. Typically, the porous carbon has a pore space, also referred to as a pore volume, wherein the pore space is a group of voids (pores) in the carbon that is fillable with a gas or fluid. In this regard, properties of porous carbon, and manufacturing methods are described in the prior art, for example US Publication No. 2017 / 0015559, the full disclosure of which is hereby incorporated by reference in its entirety for all purposes.

The Si portion of the silicon-carbon composite materials may be pure silicon or a material composition comprising silicon. For example, the Si portion may be at least one alloy. An alloy may be a silicon-titanium alloy (Si-Ti), a silicon iron alloy (Si-Fe), a silicon nickel alloy (Si-Ni). In a further embodiment, the Si portion may consist of P-dopants, As-dopants or N-dopants. A P-dopant is usually a phosphorus dopant, an As-dopant is usually an arsenic dopant and an N-dopant is usually a nitrogen dopant.

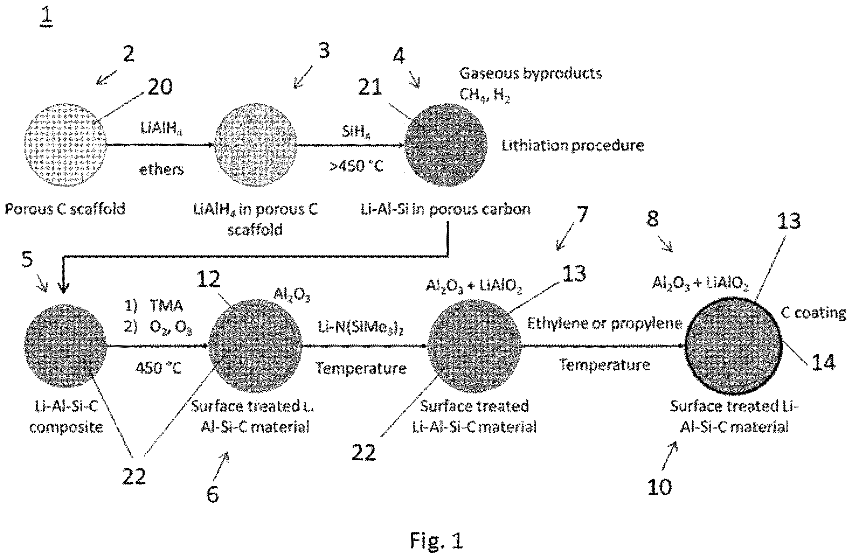

Fig. 1 shows an exemplary diagram illustrating a method 1 for manufacturing a surface-coated lithium-silicon-carbon composite material 10 according to an embodiment of the invention.

In a first method step 2 a porous carbon scaffold with micropores and mesopores is provided. The shown shape and size of the porous carbon scaffold 20 and of the lithium-silicon-carbon composite material 10 is intended for illustration purpose of the method 1. The final shape and size of the utilized materials may vary depending on the requirements.

In a further method step 3 a Li compound is introduced into the micropores and mesopores of the provided porous carbon scaffold 20 via a solution based infiltration method. Then in a further method step 4, the solvent of the solution based infiltration method is removed in order to yield or form a microporous and mesoporous carbon scaffold with introduced Li compound 21. Thus, the porous carbon scaffold 20 is provided in a pre-lithiated form e.g. Li-AI alloys.

Furthermore, in a method step 5 at least one additional compound comprising Si, Fe, Al, Ni, W and/or Ti is introduced into the micropores and mesopores of the porous carbon scaffold by chemical vapor infiltration in order to form a lithium-alloy-carbon composite material 22. Preferably, SiH₄ is utilized as the additional compound for performing the chemical vapor infiltration step.

In the following method steps 5, 6 at least partially on a surface area of the lithium-alloy-carbon composite material 22 is provided with a surface coating 11. At least one surface coating layer 12 of the surface coating comprises silicon oxides, aluminum oxides or zirconium oxides. The lithium-alloy-carbon composite material 22 is treated with a metal alkoxide or metal amide or alkyl metal compound in order to form a processed compound layer (not shown). In the shown embodiment, the surface area of the lithium-alloy-carbon composite material 22 is covered with trimethylaluminum TMA. During the exposure of the surface area to the trimethylaluminum it dissociatively chemisorbs on the surface area of the lithium-alloy-carbon composite material 22 and any remaining trimethylaluminum which is in gas-phase can be removed easily.

The dissociative chemisorption of trimethylaluminum TMA results in a processed compound surface which is covered with AlCH₃ molecules. This processed compound surface is treated with moisture H₂O or oxygen O₂ or ozone O₃ in order to form the at least one first layer of surface coating 12.

This first surface coating layer 12 consists of of Al₂O₃ molecules since the treatment leads to a chemical reaction of the CH₃ of the processed compound surface. Such coating may be provided with thermal atomic layer deposition which also requires a temperature increase, e.g. to 450°C.

In an optional step 7 the first surface coating layer 12 can be treated with Li-N(SiMe₃)₂ in combination with heating in order to modify the first surface coating layer 12 to a modified first surface coating layer 13 such that it contains Li in form of LiAlO₂ in addition to the Al₂O₃ molecules. Such molecules with lithium Li may increase the kinetics of Li ions through the modified first surface coating layer 13.

In a further step 8, a second surface coating layer 14 can be applied on top of the first surface coating layer 13 which was previously modified such that it contains LiAlO₂ and Al₂O₃ molecules. In the illustrated example, the second surface coating layer 14 consists of carbon C.

The first surface coating layer 13 and the second surface coating layer 14 are forming the surface coating 11 of the lithium-silicon-carbon composite material. Thus, after applying of the surface coating 11 the surface-coated lithium-silicon-carbon composite material 10 is formed which is formed as lithium-alloy-silicon-carbon composite material in the shown example.

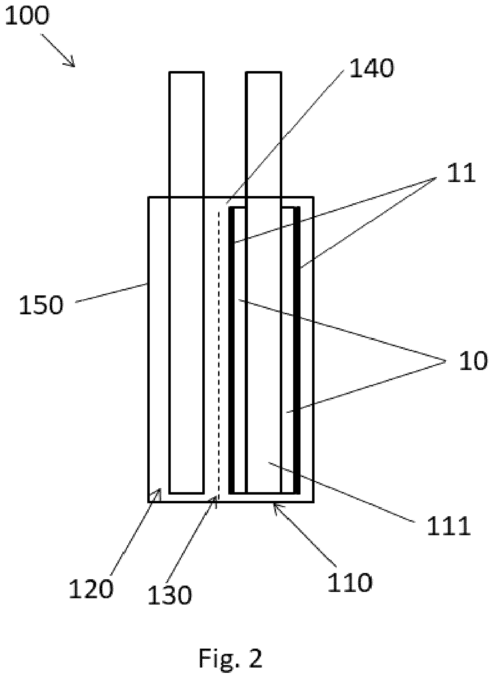

Fig. 2 shows a sectional view of an exemplary electrochemical storage device 100 with an electrode anode 110 comprising a surface-coated lithium-silicon-carbon composite material 10 manufactured with a method illustrated in Fig. 1.

The electrochemical storage device 100 is formed as a lithium-ion-battery cell. The electrochemical storage device 100 comprises at least one anode electrode 110, at least one cathode electrode 120 and a separator 130 disposed between the cathode electrode 120 and the anode electrode 110. The cathode electrode preferably comprises a transition metal oxide.

Furthermore an electrolyte 140 comprising lithium ions is provided in a cell housing 150 of the electrochemical storage device 100. The electrochemical storage device 100 can be formed as a lithium-ion-battery cell in a pouch form. Thus, the cell housing 150 may be formed as a aluminum bag. The anode electrode 110, the cathode electrode 120 and the separator 130 are arranged in the cell housing 150, too.

It is noted that Fig. 2 shows a simplified sectional view. The anode electrode 110, the cathode electrode 120 and the separator 130 are usually formed as multiple layers which are winded or folded in order to optimize packaging and in order to increase the possible surface area of the electrolyte 140. In the shown example, only one layer of the components is visible for illustrational purpose.

The anode electrode 110 is coated on both sides with a surface-coated lithium-alloy-lithium-silicon-carbon composite material 10. The surface coating 11 of the surface-coated lithium-silicon-carbon composite material 10 is performed on surface areas of the lithium-silicon-carbon composite material 10 which are not in contact with a current collector 111 of the anode electrode 110.

By utilizing an anode electrode 110 with the surface-coated silicon-carbon material 10 the requirements on a dry room environment for manufacturing the electrochemical storage device 100 can be reduced. Especially during filling of the electrolyte 140 into the cell housing 150 the chemical interaction of the electrode anode with contaminants can be reduced or prevented due to the surface protection via the surface coating 11.

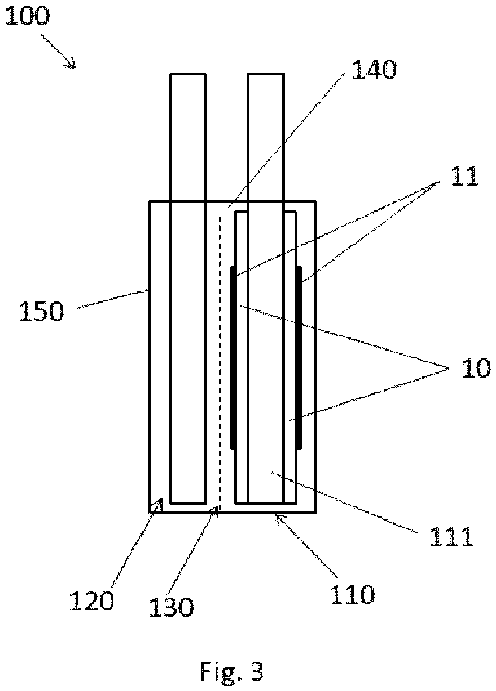

In Fig. 3 a further exemplary electrochemical storage device 100 is shown. The electrochemical storage device 100 comprises an electrode anode 110 with a surface-coated lithium-silicon-carbon composite material 10. In contrast to the embodiment shown in Fig. 2, the surface coating 11 of the lithium-silicon-carbon composite material 10 is applied partially on the surface are of the lithium-silicon-carbon composite material 10 such that parts of the surface area of the lithium-silicon-carbon composite material 10 remain without the surface coating 11.

## Claims

1. A lithium-silicon-carbon composite material (10), especially formed as a surface-coated lithium-silicon-carbon composite material, comprising:
- a porous carbon scaffold (20) comprising micropores and mesopores and a total pore volume no less than 0.5 cm³/g;
- a silicon content from 30% to 70%, including 30% and 70%;
- a Li content from 2% to 20%, including 2% and 20%;
- and an at least partly applied first surface coating layer (12) forming a surface coating (11) on a surface area of the lithium-silicon-carbon composite comprising one or multiple elements of Li, B, Al, Si, P, Ti, Zr, Nb and/or W.

2. Material of claim 1, wherein the at least partially applied first surface coating layer (12, 13) has a thickness in the range from of 0.1 nm to 1 µm.

3. Material according to claim 1 or 2, wherein the first surface coating layer (12, 13) comprises a metal oxide from at least one of the elements Li, B, Al, Si, P, Ti, Zr, Nb and/or W.

4. Material according to anyone of claims 1 to 3, wherein at least 50% or more of the surface area of the lithium-silicon-carbon composite material (10) is covered with the surface coating (11).

5. Material according to anyone of claims 1 to 4, wherein the surface coating (11) of the lithium-silicon-carbon composite material (10) comprises a second surface coating layer (14).

6. Material according to claim 5, wherein the second surface coating layer (14) is formed as a carbon coating.

7. Material according to anyone of claims 1 to 6, wherein the surface area of the lithium-silicon-carbon composite material (10) is in the range of 2m²/g to 30 m²/g, especially in the range of 4 m²/g to 10 m²/g.

8. Material according to anyone of claims 1 to 7, wherein the first surface coating layer (13) comprises lithium in form of LiAlO₂ or Li₂ZrO₃ molecules.

9. A method (1) to manufacture a surface-coated lithium-silicon-carbon composite material (10) according to anyone of the claims 1 to 8, wherein
- a porous carbon scaffold (20) with micropores and mesopores is provided,
- a Li compound is introduced into the micropores and mesopores of the provided porous carbon scaffold (20) via a solution based infiltration method,
- the solvent is removed in order to yield a microporous and mesoporous carbon scaffold with introduced Li compound (21),
- at least one additional compound comprising Si, Fe, Al, Ni, W and/or Ti is introduced into the micropores and mesopores of the porous carbon scaffold by chemical vapor infiltration in order to form a lithium-alloy-carbon composite material (22),
- at least one surface coating layer (12, 13) is applied at least partially on a surface area of the lithium-alloy-carbon composite material (22), wherein the at least one surface coating layer (12, 13) comprises silicon oxides, aluminum oxides or zirconium oxides, thereby forming a surface-coated lithium-silicon-carbon composite material (10).

10. Method according to claim 9, wherein as Li compound LiAlH₄ is introduced into the micropores and mesopores of the provided porous carbon scaffold (20) via the solution-based infiltration method.

11. Method according to claim 9 or 10, wherein the at least one surface coating layer (12, 13) is applied at least partially via a gas phase deposition method onto the surface area of the lithium-silicon-carbon composite material (10).

12. Method according to anyone of the claims 9 to 11, wherein the lithium-alloy-carbon composite material (22) is treated with a metal alkoxide or metal amide or alkyl metal compound to form a processed compound layer on the surface area; and wherein the processed compound layer on the surface area is treated with moisture or oxygen or ozone in order to form the at least one surface coating layer (12).

13. Method according to anyone of claims 9 to 12, wherein the surface coating (11) of the surface area of the lithium-silicon-carbon composite material (10) comprises lithium in the at least one surface coating layer (13) and/or as part of the lithium-silicon-carbon composite material (10).

14. Method according to anyone of claims 9 to 13, wherein the surface coating (11) of the surface area of the lithium-silicon-carbon composite material (10) comprises at least one metal oxide from at least one of the elements Li, Al, Si, Zr, Nb and/or W.

15. Method according to anyone of claims 9 to 14, wherein the at least one surface coating layer (12, 13) is applied on the surface area of the lithium-silicon-carbon composite material (10) at a temperature in a range of 25°C to 550°C.

16. Method according to claim 12, wherein the treatment of the lithium-alloy-carbon composite material (22) with a metal alkoxide or metal amide or alkyl metal compound in order to form a processed compound layer and the treatment of the processed compound layer with moisture or oxygen or ozone are repeated at least once.

17. Method according to anyone of claims 12 or 16, wherein the treatment of the processed compound layer with moisture or oxygen or ozone is performed at a temperature in a range of from 25°C to 450°C.

18. An anode electrode (110), comprising a current collector (111) and a surface-coated lithium-silicon-carbon composite material (10) according to anyone of the claims 1 to 8, wherein the surface-coated lithium-silicon-carbon composite material is arranged on at least one side of the current collector.

19. Anode electrode according to claim 18, wherein the a surface area of the lithium-silicon-carbon composite material (10) which is not in contact with the current collector (111) is at least partially covered with a surface coating (11) with a layer thickness in the range from 0.1 nm to 1 µm.

20. A method to manufacture at least one anode electrode (110) according to claim 18 and 19, wherein
- a silicon-carbon composite mixture, especially a lithium-silicon-carbon composite mixture, is provided with at least one carbon compound,
- the silicon-carbon composite mixture with the carbon compound are combined with an aqueous and/or a non-aqueous binder solution are combined in order to form an electrode paste,
- the electrode paste is applied to a current collector, e.g. a conductor foil,
- the current collector with the applied electrode paste are dried at a temperature of 100 °C to 140 °C thereby forming at least one anode electrode.

21. Method for manufacturing at least one anode electrode (110) according to claim 17, wherein
- a dry or semi-dry silicon-carbon composite mixture, especially a lithium-silicon-carbon composite mixture, with at least one carbon is provided; wherein the mixture is combined with a binder powder and comprises graphite particles and/or carbon black particles;
- the silicon-carbon composite mixture combined with the binder powder is applied via calendering at least partially on at least one surface of a current collector formed as a conductor foil (111);
- the conductor foil (111) with the applied mixture is dried at a temperature of 100 °C to 140 °C forming the at least one anode electrode (110)

22. An electrochemical storage device (100), especially formed as a lithium-ion-battery, comprising:
- at least one anode electrode (110), according to any one of claims 18 and 19;
- at least one cathode electrode (120), comprising a transition metal oxide;
- a separator (130) disposed between the cathode electrode (120) and the anode electrode (110); and
- an electrolyte (140) comprising lithium ions.
